(19) **Europäisches Patentamt / European Patent Office / Office européen des brevets**

(11) **EP 1 511 917 B1**

(12) **EUROPEAN PATENT SPECIFICATION**

(45) Date of publication and mention
of the grant of the patent:
**05.08.2009  Bulletin 2009/32**

(21) Application number: **03734390.2**

(22) Date of filing: **04.06.2003**

(51) Int Cl.:
*E21B 49/00* (2006.01)     *E21B 47/10* (2006.01)

(86) International application number:
**PCT/US2003/017572**

(87) International publication number:
**WO 2003/102372 (11.12.2003 Gazette 2003/50)**

(54) **METHOD AND APPARATUS FOR A HIGH RESOLUTION DOWNHOLE SPECTROMETER**

VORRICHTUNG UND VERFAHREN ZUM HOCHAUFLÖSENDEN BOHRLOCHSPEKTROMETER

PROCEDE ET APPAREIL POUR SPECTROMETRE DE FOND HAUTE RESOLUTION

(84) Designated Contracting States:
**DE DK FR GB**

(30) Priority: **04.06.2002  US 385633 P**
**04.06.2002  US 162023**

(43) Date of publication of application:
**09.03.2005  Bulletin 2005/10**

(73) Proprietor: **BAKER HUGHES INCORPORATED**
**Houston, TX 77019-2118 (US)**

(72) Inventors:
• **DIFOGGIO, Rocco**
 **Houston, TX 77099 (US)**

• **WALKOW, Arnold**
 **Houston, TX 77024 (US)**
• **BERGREN, Paul**
 **Houston, TX 77040 (US)**

(74) Representative: **Chamberlain, Alan James et al**
**Haseltine Lake LLP**
**Redcliff Quay**
**120 Redcliff Street**
**Bristol BS1 6HU (GB)**

(56) References cited:
**EP-A- 1 150 106          GB-A- 2 368 391**
**US-A- 5 070 245          US-A- 5 166 747**
**US-A- 5 939 717**

**Description**

**BACKGROUND OF THE INVENTION**

Field of the Invention

The invention pertains in general to a high-resolution downhole scanning spectrometer that is suitable for downhole use and in particular, to a downhole spectrometer that employs spinning, oscillating, or stepping one or more optical interference filters to change the angle at which light passes through them to obtain a higher resolution measurement.

Summary of the Related Art

Oil companies take samples from formations to determine the characteristics of the formation. These samples are typically pumped from the formation and initially contain contaminants such as well bore fluid that have invaded the formation. Contaminated sample yield invalid results when trying to determine the properties of a hydrocarbon bearing formation. Thus, oil companies desire an accurate measure of sample contamination percentage in real time as they are pumping sample fluid from a formation so that they can decide when to divert a reasonably pure formation fluid sample into a collection tank. They do not want to pump unnecessarily long and waste very expensive rig time. Conversely, they do not want to pump too little and collect a useless sample. If the contamination is more than about 10%, the sample may be useless.

In such cases, the PVT properties measured in the lab cannot be corrected back to true reservoir conditions because of this excessive contamination. It is therefore necessary to perform measurements downhole to assess the sample contamination and associated merits of information regarding formation properties derived from the downhole sample. One method of investigation comprises using a spectrometer to perform optical measurements on the fluid samples as they are pumped through a sampling instrument and subsequently collected in a downhole environment.

Numerous factors affect downhole spectrometry measurements. In the down-hole environment, photodetectors are utilized and must operate at high ambient temperatures, thus, they are very noisy and generate very little signal. Moreover, dirty or contaminated samples of flowing streams of crude oil containing scatterers such as sand particles or gas bubbles tend to add noise to the system. US 5,166,747 A discloses a downhole spectrograph and EP 1,150,106 A discloses a spectrometer having moving filter. These scatterers cause the optical spectrum to momentarily "jump" up, appearing darker as the scatterers pass through the sample cell. At high concentrations, these scatterers cause the measured spectrum to jump or rise up repeatedly. To first order, the scattering effect is just a momentary baseline offset. One way to eliminate baseline offset and greatly improve the signal-to-noise ratio of a downhole spectrometer is to collect the derivative of the spectra with respect to wavelength. Derivative spectra can be obtained by modulating the wavelength of light and using a lock-in amplifier.

It is commonplace for spectrometers to disperse white light into its constituent colors. The resulting rainbow of colors can be projected through a sample and onto a fixed array of photodetectors. Alternatively, by rotating a dispersive element (i.e. grating, prism), the rainbow can be mechanically scanned past a single photodetector one color at a time. In either case, an operator can obtain a sample's darkness versus wavelength, in other words, its spectrum.

Photodetectors and their amplifiers almost always have some thermal noise and drift, which limit the accuracy of a spectral reading. As operating temperature increases, noise and drift increase dramatically at the same time that photodetector signal becomes significantly weaker. If an operator oscillates the wavelength (color) of light about some center wavelength, then the operator can reject most photodetector and amplifier noise and drift by using an electronic bandpass filter, centered at the oscillation frequency. The operator can further reject noise by using a phase-sensitive ("lock-in") amplifier that not only rejects signals having the wrong frequency but also rejects signals having the correct frequency but having no fixed phase relationship (indicative of noise) relative to the wavelength oscillation. A lock-in amplifier can improve signal to noise by as much as 100 db, which is a factor of $10^{100\,db/10}$ or 10 billion.

The output of the lock-in amplifier used in this procedure is proportional to the root-mean-square (RMS) amplitude of that portion of the total signal, that portion being at the same frequency and having a fixed phase relationship relative to the optical frequency being observed. The more that the darkness of the sample changes with color, the larger importance this RMS value will have to the operator. In other words, the output of lock-in amplifier for a system with an oscillating-wavelength input is proportional to the derivative of the spectrum (with respect to wavelength) at the center wavelength of the oscillation.

U.S. Patent 3,877,818, *Photo-Optical Method for Detennining Fat Content in Meat*, issued April 15, 1975, to Button et al. discloses an apparatus in which light reflected off the surface of a piece of meat passes through a lens and strikes an oscillating mirror. The angle of reflection of the light reflected off this mirror varies with the mirror's oscillation. Light reflected from the mirror strikes a stationary interference filter and onto a photodetector. The color transmitted through the interference filter varies slightly with the angle of incidence of the light beam striking it. Thus, the wavelength of radiation passing through the filter oscillates over a narrow range about the wavelength for fat absorption of meat and can be used to determine the fat content of the meat. Button et al. does not enable the possibility of a full rotation or control of the angular deviation.

Current down-hole "spectrometers" (for example, Schlumberger's Optical Fluid Analyzer (OFA) and Baker Atlas' SampleView[SM]) utilize discrete filter photometers. Each optical channel is achieved by filtering light for each individual channel through an optical filter of a color corresponding to the optical channel. Therefore, the wavelength coverage of such a discrete spectrometer is not continuous, but discrete. The discrete spectrum has gaps that go from the center wavelength of one discrete optical filter to the center wavelength of the next discrete optical filter. These gaps can be large ones of 100 to 200 nm or more in wavelength coverage. The channels of such devices are broad. In the current down-hole spectrometer, all hydrocarbon peaks are lumped into one broad channel centered at 1740 nm, with a Full Width at Half Maximum (FWHM) of 32 nm.

The down-hole environment is difficult for operating sensors. Reasons include limited space within a tool's pressure housing, elevated temperatures, and the need to withstand shock and vibration. Components such as motors, interference filters, and photodiodes in the logging tools, are already fabricated and available to withstand temperature, shock and vibration of the downhole environment. Thus, it is possible to manufacture this spectrometer into a small enough package in order to squeeze into the available space inside the current SampleView[SM] module.

For comparison, many laboratory spectrometers use a grating to disperse the light into its constituent colors. However, almost all gratings are an epoxy-on-glass replica of a master grating. These epoxy replicas soften and creep at high temperature, which causes a distortion in the spectrum and a loss in light intensity. Moreover, the price of an all-glass master grating ($50-100K) is prohibitively expensive.

Known laboratory spectrometers typically utilize Fourier Transform (FT) spectroscopy which are unsuitable for down-hole applications. FT spectrometers are large (2-3 feet long, 1-2 feet wide), heavy (200-300 lbs), mechanically and electronically complicated, and must maintain perfect alignment of all their optical components to work properly, which is why they are typically built on a very rigid framework. Thus, there is a need for a high-resolution spectrometer which is small enough and robust for operation in a downhole environment.

## SUMMARY OF THE INVENTION

According to one aspect of the present invention, there is provided a down hole spectrometer apparatus comprising a sonde for traversing a borehole, an instrument body in the sonde including a collimated light beam arranged to be incident on a fluid sample when the spectrometer is in use, a portion of light incident upon the fluid sample being transmitted through the sample, the apparatus characterized by: at least two interference filters attached to a spindle, a rotator component operable to rotate the angle of the spindle, and its attached interference filters, relative to the incident light upon the interference filters, so that, upon rotation, the angle at which light strikes the filters changes; and at least two light-detecting devices, with each light-detecting device paired with one interference filter, wherein the at least two interference filters, are arranged such that transmitted light is incident upon the face thereof, and such that light transmitted from each interference filter is incident upon the light-detecting device with which it is paired.

According to another aspect of the present invention, there is provided a method of measuring the apparatus spectrum of a fluid sample in a downhole environment comprising: lowering a sonde containing a downhole spectrometer as claimed in any one of claims 1 to 7 into a bore hole; illuminating a fluid sample in the sampling spectrometer; correlating angular position of the filters of the spectrometer apparatus with measured light intensity to obtain a measure of the spectrum of the fluid sample at different wave lengths of light; directing light from the fluid sample onto the at least two interference filters of the spectrometer apparatus; rotating the at least two interference filters on a spindle to obtain different wavelengths of light transmitted through the filters as the angle of incidence of the light upon the rotating filters changes; and recording the intensities corresponding to the different wavelengths.

Embodiments of the resent invention provides a simple, robust and versatile high-resolution spectrometer that is suitable for downhole use. The present invention provides a method and apparatus incorporating a spinning, oscillating or stepping optical interference filter to change the angle at which light passes through the filters after passing through a sample under analysis downhole. As each filter is tilted, the colour or wavelength of light passed by the filter changes. Black plates are placed between the filters to isolate each filter's photodiode. The spectrometer of the present invention is suitable for use with a wire line formation tester, such as the Baker Atlas Reservation Characterization Instrument to provide supplemental analysis and monitoring of sample clean up. The present invention is also suitable for deployment in a monitoring while drilling environment. The present invention provides a high resolution spectrometer which enables quantification of a crude oil's percentage of aromatics, olefins and saturates to estimate a sample's gas oil ration (GOR). Gases such as $CO_2$ are also detectable. The percentage of oil-bases mud filtrate contamination in a crude oil sample can be estimated with the present invention by using a suitable training set and chemometrics, a neural network, or other type of correlation method.

BRIEF DESCRIPTION OF THE DRAWINGS
**Figure 1** is an illustration of the present invention deployed in a downhole environment in a bore hole;

**Figure 2** is a schematic representation of a preferred embodiment of the present invention;

**Figures 3A** and **3B** illustrate a more detailed schematic representation of a preferred embodiment of the present invention showing a time groove;

**Figure 4** illustrates an oscilloscope display for an empty 2 mm path length glass sample cell;

**Figure 5** illustrates an oscilloscope display for a 2 mm glass sample cell full of water;

**Figure 6** illustrates an oscilloscope display for a 2 mm glass sample cell full of crude oil;

**Figure 7** illustrates a processed spectrum of the same crude oil taken on a research-grade Cary 500 laboratory spectrometer;

**Figure 8** illustrates how a Full Width at Half Maximum of the transmission of an 1800 nm filter changes with tilt;

**Figure 9** shows the correlation ($r^2$=.993) of filtrate contamination to two wavelengths of a training set of forty-three 2-wavenumber-resolution spectra;

**Figure 10** shows the correlation ($r^2$=.908) of filtrate contamination to two wavelengths of a training set of forty-three 22-wavenumber-resolution spectra; and

**Figure 11** compares the near infrared absorption bands of gaseous carbon dioxide with the near infrared absorption bands of water vapor.

## DETAILED DESCRIPTION OF A PREFERRED EMBODIMENT

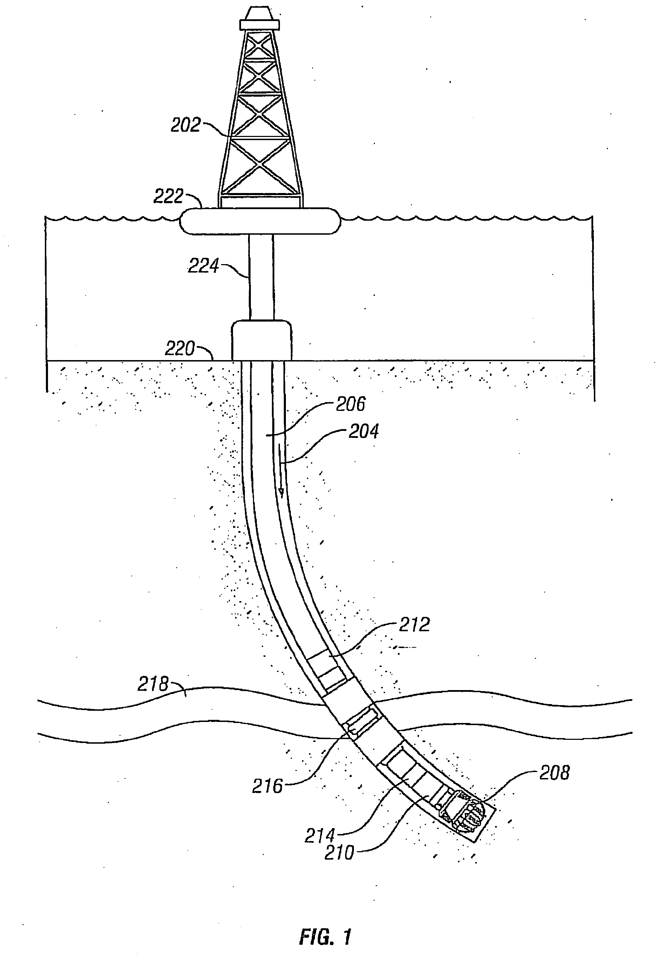

**Figure 1** illustrates a preferred embodiment of the present invention deployed in a borehole. The present invention is suitable for deployment in either a wire line, slick line or monitoring while drilling environment. **Figure 1** illustrates a preferred embodiment of the present invention deployed in a monitoring while drilling operation.
Turning now to **Figure 1, Figure 1** is a drilling apparatus according to one embodiment of the present invention. A typical drilling rig **202** with a borehole **204** extending there from is illustrated, as is well understood by those of ordinary skill in the art. The drilling rig **202** has a work string **206,** which in the embodiment shown is a drill string. The drill string **206** has attached thereto a drill bit **208** for drilling the borehole **204.** The present invention is also useful in other types of work strings, and it is useful with a wireline, jointed tubing, coiled tubing, or other small diameter work string such as snubbing pipe. The drilling rig **202** is shown positioned on a drilling ship **222** with a riser **224** extending from the drilling ship **222** to the sea floor **220.** However, any drilling rig configuration such as a land-based rig may be adapted to implement the present invention.
If applicable, the drill string **206** can have a downhole drill motor **210.** Incorporated in the drill string **206** above the drill bit **208** is a typical testing unit, which can have at least one sensor **214** to sense downhole characteristics of the borehole, the bit, and the reservoir, with such sensors being well known in the art. A useful application of the sensor **214** is to determine direction, azimuth and orientation of the drill string **206** using an accelerometer or similar sensor. The bottom hole assembly (BHA) also contains the formation test apparatus **216** of the present invention, which will be described in greater detail hereinafter. A telemetry system **212** is located in a suitable location on the work string **206** such as above the test apparatus **216.** The telemetry system **212** is used for command and data communication between the surface and the test apparatus **216.**

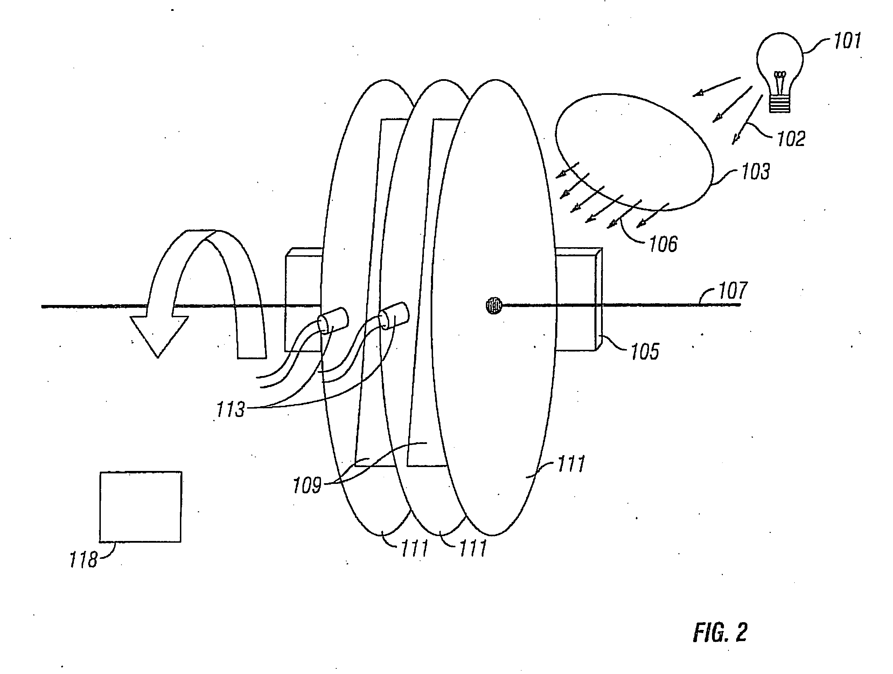

**Figure 2** illustrates a preferred embodiment of the invention. A light source **101** (e.g. a tungsten light bulb) provides a beam of light **102** which is targeted to be incident upon and through a collimating lens **103** onto a sample **105** which contains a sample to be analyzed by the present invention. In a preferred embodiment, formation fluid samples flow through sample chamber (chamber not shown for simplicity) and are tested for purity or other properties by the present invention The collimated light is shown upon and transmitted through the sample **105** and towards a filter assembly. The filter assembly comprises one or more optical filters **109** positioned between baffles **111** and mounted on a rotating spindle **107.** The rotary spindle **107** is provided with an angular encoder. **Firgure 2** illustrates, for example, an assembly in which two optical filters **109** are positioned between three baffles **111.** A rotating spindle **107** is oriented with its axis generally perpendicular to the direction of the light transmitted from the sample and rotates about its axis. The one or more optical filters **109** are mounted on the spindle so that, in one angular orientation of the spindle, the plane of the filters are generally perpendicular to the light transmitted from the sample. As the spindle rotates, light **106,** after passing through lens **103,** impinges on the face of interference filters **109** at incident angles other than normal. A processor **118** controls data acquisition and analysis for the present invention.

Light transmitted by the interference filters **109** is transmitted to two or more photodetectors **113** (e.g., InGaAs photodetectors). The filters are specified according to their center wavelength for transmitted light at normal incidence. However, their center wavelength for transmitted light is different at non-normal incidence. As one tilts a single-color optical interference filter so that white light no longer strikes the filter perpendicular to its face, the color (that is, wavelength) of the light that is transmitted, shifts from its original color to a shorter wavelength. The greater the angle of tilt of an interference filter away from normal incidence, the greater the shift in the wavelength. For example, tilting a yellow ($\lambda$=590 nm) interference filter, the transmitted light shifts away from yellow. With sufficient tilt from normal, the light transmitted by the "yellow" filter shifts to green ($\lambda$=525 nm). Interference filters are chosen according to desired applications. As an example, a $\lambda$=1800 nm wave length interference filter, when rotated, transmits over a broad range of wavelengths so that the range of wavelengths scans past the hydrocarbon absorbance peaks located around $\lambda$=1760 nm.

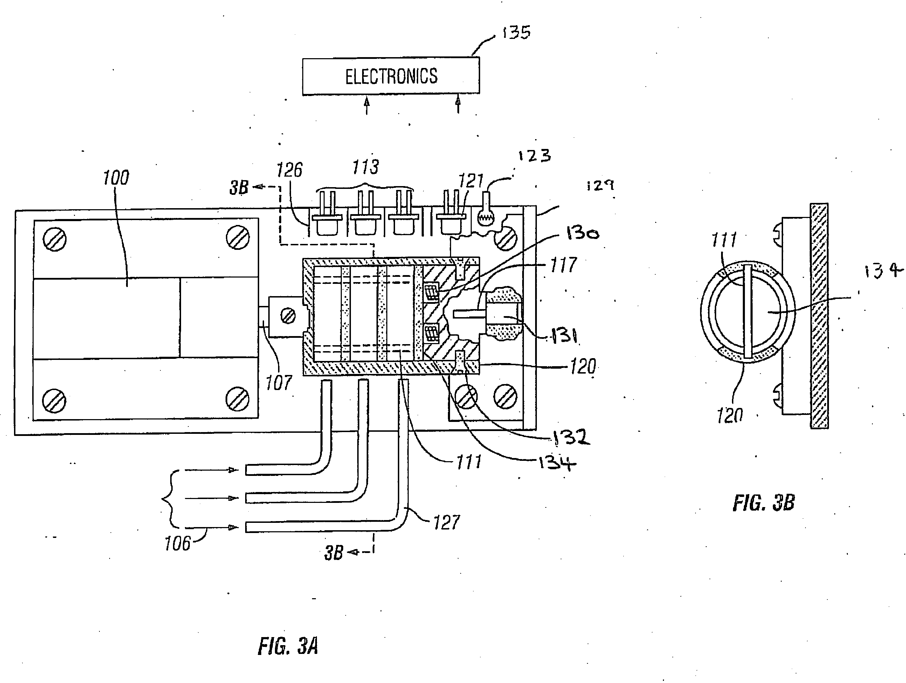

The external surfaces of the housing and the spacer disks and stray light barriers are optically black to prevent stray light from interfering with the light to be measured. One exception is a narrow machined timing groove **117** as shown in **Figure 3** and a second timing groove on the opposite side of the housing to obtain two timing marks per revolution and to select which filter is being read and from which side it is read or alternatively to average the readings through both sides. Additional timing grooves are provided for added angular displacement resolution for rotational position determination. The light illuminates the timing groove when it appears, and a timing detector diode senses the light from the timing groove at which time the data acquisition electronics are alerted to obtain and analyze data.

The present invention provides for full exposure of each optically isolated filter during rotation around an exposed center of rotation. Each filter is held by its edges to avoid shadowing the filter's center of rotation. The present invention enables full analysis and expanded capability to read only a designated side of each filter or an average of both sides. Four spectral scans per revolution are provided, which are selectable so that any scan can be selected separately or two or more scans can be averaged.

For collimated light that is incident on an interference filter, the transmitted wavelength is given by the following formula,

$$\lambda = \lambda_0 \left[ 1 - (n_0/n^*)^2 \sin^2\theta \right]^{1/2} \qquad (1)$$

where $\lambda$ is the central wavelength of the filter for light incident at an angle $\theta$ from normal, $\lambda_0$ is the central wavelength of the filter for light at normal incidence ($\theta = 0$), $n_0$ is the refractive index of medium surrounding the filter (in our case, air so $n_0$=1), $n^*$ is the effective refractive index of the filter, and $\theta$ is the angle from normal incidence ($\theta = \omega t$, where $\omega$ = angular velocity, t = time). The wavelength shift of the filter depends only on the angle by which the incident light beam is rotated away from normal incidence, regardless of whether that rotation is positive or negative. Thus, it is expected that oscilloscope displays are symmetrical (a mirror image) about the center of each spectrum. This center spectrum corresponds to a filter's nominal center wavelength, for example, $\lambda$=1800 nm. The further right or left of the center spectrum, the shorter the wavelength. Since the filter rotates on its spindle and at a constant rate so that angle depends on time, then the wavelength, $\lambda$, decreases with the absolute value of *time*, $|t-t_0|$, where $t_0$ is the moment in time at which the filter is centered on its central wavelength.

Typically, the range of shift for the wavelength of light transmitted from the filter is about 100 nm. As the angle of rotation increases, the filter becomes so tilted that almost no light goes through the face of the filter. Instead, most of the light gets reflected off the face, because it is striking it at such a glancing angle. At a large enough rotation angle, light runs into the edge of the filter or into the edge of the filter's holder.

In one mode of the invention, by spinning or oscillating such an interference filter, it is possible to quickly and continuously sweep through a range of wavelengths from the original center wavelength to a new center wavelength, which is about 100 nm shorter than the center wavelength for a given filter. To increase the range of wavelengths that are scanned by the present invention, the present invention preferably comprises several strips of interference filters (having different central wavelengths) side by side, but separated by thin black disks (baffles) **111.** These interference filter strips rotate together as shown conceptually in **Figure 2.** The thin black disks enable a photodiode placed between a pair of black disks to monitor the light transmitted by a single filter without seeing light transmitted by a neighboring filter.

A more detailed depiction of a preferred embodiment is shown in **Figure 3. Figure 3A** is a high resolution downhole spectrometer. The spectrometer comprises a base plate **129**, a spring **130**, an axle **131**, a screw **132** and a spacer **134**. As shown in **Figure 3A,** a motor and gear train assembly **100** provides rotational force to spindle **107** which in turn rotates housing **120** and optical filter plates **111.** Stray light barriers **126** are provided between photodetector diodes **113** to prevent leakage between individual diodes **113** and associated channels of information. One of the photodetector diodes **113** is a timing detector diode **121.** The stray light barriers **126**, detector diodes **113** and timing detector diode **121** are connected to electronics **135**. A timing groove **117** is illuminated by a lamp **123** to facilitate rotational and angular tracking of housing and filter **111.** Collimated light **106** emerging from the sample medium to be analyzed is run through light tubes **127** to moving filter **111.** A side view of housing **120** is shown in Figure 3B.

In another mode of the invention, it is preferred to oscillate the filter to scan over an absorption peak (e.g., λ=1667 nm for methane, or λ=1957 nm for carbon dioxide) in order to determine the difference in transmitted light intensity on-peak versus off-peak. This difference in on/off peak readings (or the amplitude of the resulting AC signal if done rapidly) is generally proportional to the concentration of the absorbing species.

For light that is incident at an angle, which is not normal to the filter, light still emerges from the filter parallel to the original beam (due to normal incidence). However, the path of the filtered light is translation displaced (offset) from the path of the light emerging from the non-rotated filter. Therefore, a sufficiently large converging lens to collect the light, regardless of offset, enables the operation of the invention. Also, the optical bandpass of the filter changes with the angle of incidence. The bandpass of the tilted filter is wider than the bandpass of the untilted filter. Note that color shifting with angle only occurs for optical filters that are based on interference. Color shifting does not occur for filters that are inherently colored.

The present invention enables the detection and analysis of small peaks or perturbations in the spectral response for a sample including the case of a small peak sitting on the shoulder of a larger peak. For example, the present invention may either step, oscillate or spin the interference filter. In the case of a small perturbation or peak upon the shoulder of another peak, the present invention may step between two colors, one that is on the peak and one off of the peak. In this way, it can detect small or overlapping peaks, which with previous downhole spectroscopy techniques and equipment, were lumped into a single broad and undiscriminating hydrocarbon band. For example, in the absorbance spectrum, the methane peak is a side peak on the main hydrocarbon peak. The present invention enables detection of this small methane peak by stepping between the methane peak at 1667 nanometers and a lower off peak color, for example 1600 nanometers. The present invention provides a stepper motor to step between positions or colors for the interference filter. By stepping between the on peak 1667 nm and off peak 1600 nm the present invention is able to detect the small peak at 1667nm for methane. Alternatively, we could quantify the amount of methane by applying chemometrics, neural networks, or other soft modeling techniques to the continuous spectra obtained by the present invention for a known training set of samples.

The high-resolution spectrometer of the present invention enables determination of the percent of aromatics, olefins, saturates and contaminants in a sample. The high-resolution spectrometer of the present invention enables detection and analysis of peaks that were heretofore undetectable with known downhole spectrometer technology. Known downhole spectrometers group together most first-overtone hydrocarbon peaks into a single hydrocarbon channel without resolving the small or overlapped peaks within this channel, which can provide information about concentrations of aromatics, olefins, saturates, filtrate contamination, and so on. In a preferred embodiment, the present invention collects high resolution spectra for a training set of known samples. Applying chemometrics to these spectra, we can develop mathematical models, which allow us to estimate the corresponding properties of unknown samples directly from their high resolution spectra. Chemometrics, neural networks, and other soft modeling techniques let us skip the intermediate steps of identifying chemical meanings for individual spectral peaks and the reasons that these peaks shift or overlap with other peaks. That is, soft modeling techniques allow us to take high resolution spectra of a known training set and directly model the chemical or physical properties of interest. One property of interest is filtrate contamination. Known sampling techniques do not currently provide a *direct* measurement of the percentage of filtrate contamination in a formation fluid sample.

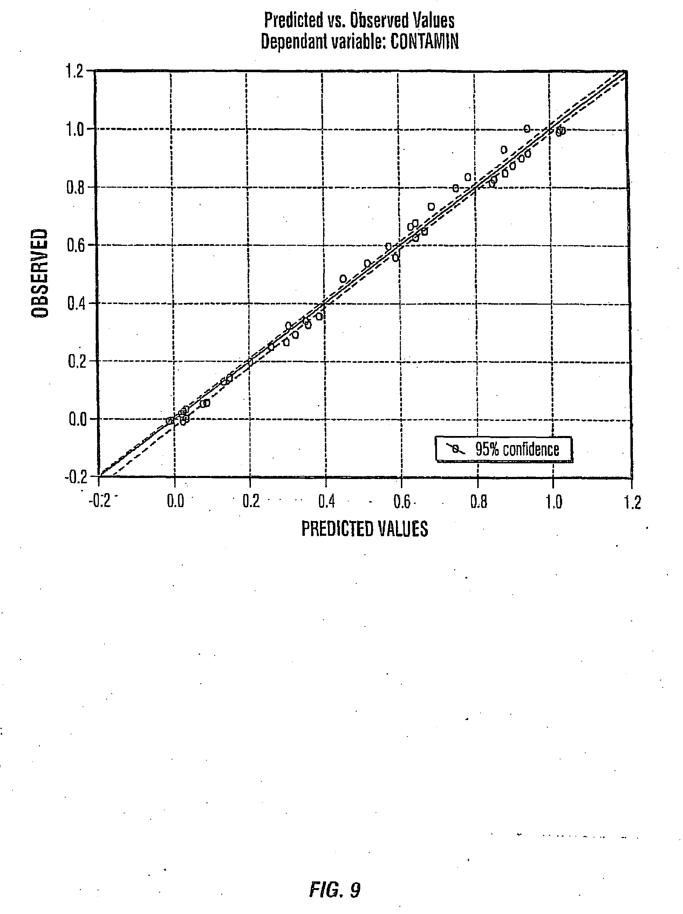

**Figure 9** plots a correlation ($r^2$=.993) found between the fraction of filtrate contamination and some very-high resolution (2-wavenumber) spectra of 3 crude oils (representing low, medium and high viscosity), 4 synthetic mud filtrates, and 36 simulated mixtures of a crude oil with a mud filtrate. These Attenuated Total Reflectance (ATR) spectra were collected on a commercial laboratory spectrometer made by Nicolet. These spectra have higher resolution than we would be able to obtain with the methods of the present invention. They spanned the fundamental frequencies of molecular vibration.

Note, that with a single equation, we were able to quantify the percentage of filtrate contamination regardless of which filtrate was contaminating which crude oil. Apparently, underlying chemical differences between filtrates and the crude oils can be detected and quantified. Here, the correlation is to a region around 3032 wavenumbers. A wavenumber is one reciprocal centimeter. Therefore, 3032 wavenumbers is $10^7$/3032 = 3298 nm because there are 10 million nanometers in a centimeter.

In **Figure 9,** we see that the fraction of filtrate contamination is given by the equation:

$$f_C = -2.25 - 1072.71 * A\_3037.38 \text{ cm}^{-1} + 1130.20 * A\_3027.74 \text{ cm}^{-1}$$

Because this correlation equation is based on the absorbance at two wavelengths (3037.38 $cm^{-1}$ and 3027.74 $cm^{-1}$) that are close to one another and whose regression coefficients are approximately equal in magnitude but opposite in sign (-1072.71 and 1130.20) it is, in essence, a correlation to the *slope* of the spectrum at the midpoint between the two wavelengths. It may be a correlation to the absence of aromatics in the filtrates because, for environmental reasons, the base oils for these synthetic muds are generally made without aromatics. The aromatic C-H stretch peak occurs from 3125-3030 $cm^{-1}$ whereas the non-aromatic C-H stretch occurs around 2940-2855 $cm^{-1}$. Thus, it appears that the slope of spectrum in the region where aromatic peaks end and non-aromatic peaks begin is a way to directly measure the filtrate contamination independent of the filtrate, the crude, or any visible colors of either (this wavelength range is far past that of visible colors or any electronic transitions). We expect that overtones (somewhere in the 1600-1800 nm range) of these fundamental bands (3125-2855 $cm^{-1}$) will have corresponding sensitivity to the underlying chemical differences between filtrates and crude oil.

Figure 9 shows:

Regression Summary for Dependant Variable: CONTAMIN (nic_mix_cm-1.sta)
R=.99663208 $R^2$=.99327550 Adjusted $R^2$=.99293927
$F_{(2,40)}$=2954.2 $p<0.0000$ Std.Error of estimate: .02963

|  | Beta | Std.Err. | B | Std.Err. | t(40) | p-level |
|---|---|---|---|---|---|---|
| Intercept |  |  | -2.25 | 0.04160 | -54.0242 | 0.000000 |
| 3037.38_CM$^{-1}$ | -6.28363 | 0.241871 | -1072.71 | 47.29116 | -25.9792 | 0.000000 |
| 3027.74_CM$^{-1}$ | 7.21258 | 0.241871 | 1130.20 | 37.90094 | 29.8199 | 0.000000 |

Correlation of percent contamination to 2-wavenumber resolution Attenuated Total Reflectance spectra of 4 filtrates, 3 crude oils and 36 simulated random mixtures of them. Note that a high correlation is obtained between these very high resolution spectra and the percentage of filtrate contamination regardless of which filtrate or crude oil was used in the mixture. These ATR spectra were obtained in the lab on a Nicolet spectrometer,

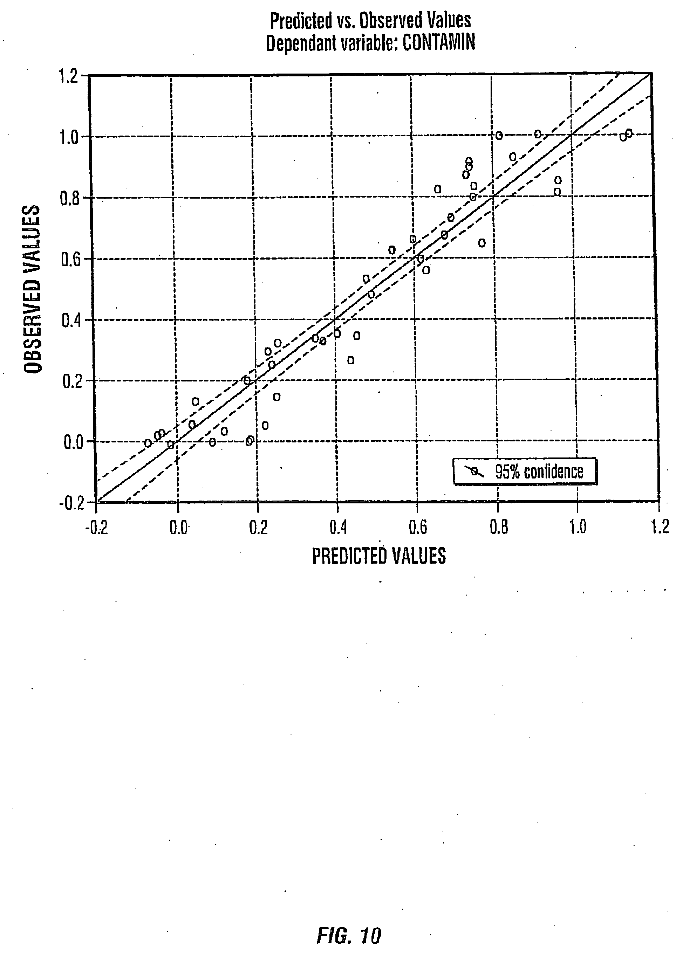

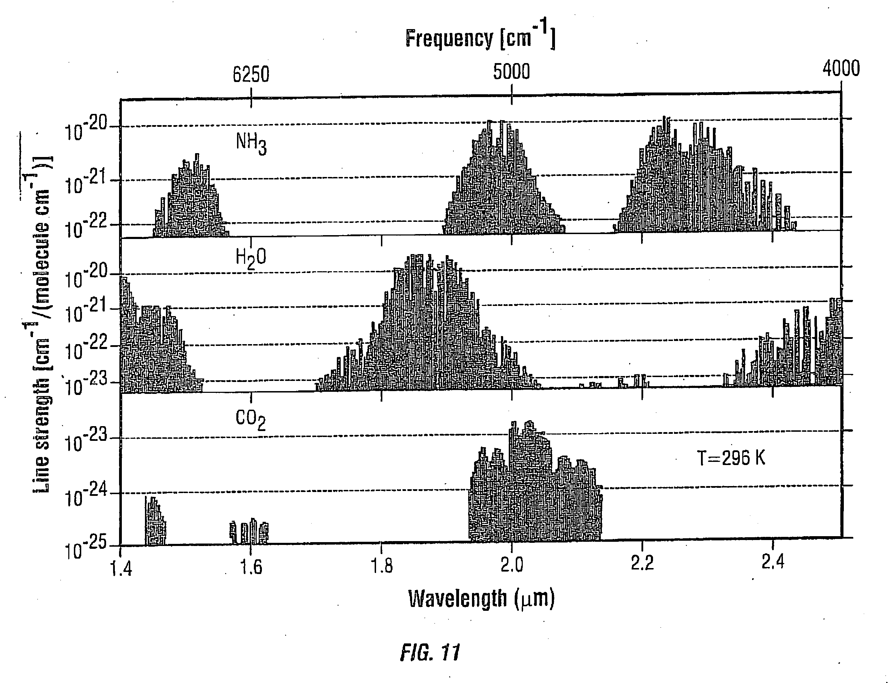

In like manner, **Figure 10** plots the correlation ($r^2$=.908) between lower-resolution spectra, which were derived from the original spectra by processing them to reduce their resolution to 22 wavenumbers full width half maximum. This processing was done to simulate the spectra that might be obtained using a rotating interference filter, described in the present invention, instead of a lab spectrometer. Note that, at 3162 wavenumbers, the bandpass expressed in wavenumbers is exactly equal to the bandpass expressed in nanometers. At 3030 wavenumbers, a 22-wavenumber bandpass represents approximately a 20-nm bandpass. The present invention may also be used to detect $CO_2$. As shown in **Figure 11,** $CO_2$ has bands of peaks near 1430 nm, 1575 nm, 1957 nm, 2007 nm, and 2057 nmm. Some of these overlap with water or hydrocarbon or other absorption peaks. A technique such as that of the present invention, which allows rapidly rendering the on-peak versus off-peak absorbance may be able to resolve and quantify the peak regardless of such interferences.

Figure 10 shows:

Regression Summary for Dependent Variable: CONTAMIN (nic_mix_cm-1.sta)
R=.95516236 $R^2$=.91233566 Adjusted $R^2$=.90795244
$F_{(2,40)}$=208.14 $p<0.0000$ Std,Error of estimate:.10697

|  | Beta | Std.Err. | B | Std.Err, | t(40) | p-level |
|---|---|---|---|---|---|---|
| Intrecept |  |  | -0.907 | 0.15969 | -5.68167 | 0.000001 |
| 3037.38_WN22 | 2.27917 | 0.164806 | 363.419 | 26.27861 | 13.82944 | 0.000000 |
| 3027.74_WN22 | -1.48301 | 0.164806 | -267.143 | 29.68734 | -8.99856 | 0.000000 |

After processing the 2-wavenumber resolution spectra to simulate 22-wavenumber spectra, there is still a high correlation between contamination and the spectra of these filtrates, crudes, and simulated random mixtures. These lower resolution spectra are intended to simulate spectra collected with an interference filter.

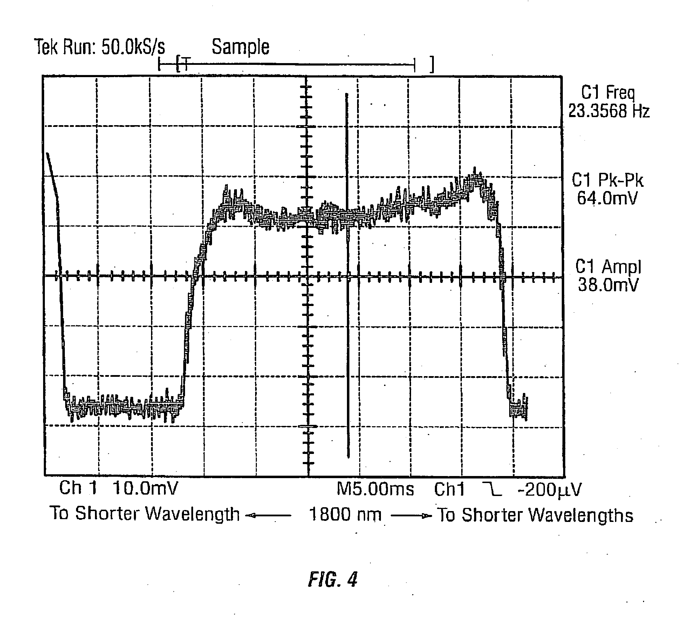

**Figures 4-7** illustrate an example of data taken with a spinning filter apparatus in a laboratory. **Figure 4** shows an oscilloscope display for an empty 2 mm path length glass sample cell. The absorbance of the glass cell is both constant and negligible from 1700-1800 nm. However, the tungsten light source, which peaks in intensity around 1000 nm, continues to tail off in intensity in going from 1700 nm to 1800 nm. Indeed, the center wavelength (1800 mm) of the empty cell's raw spectrum is less than the intensity of wavelengths at either end (about 1700 nm) of the spectrum.

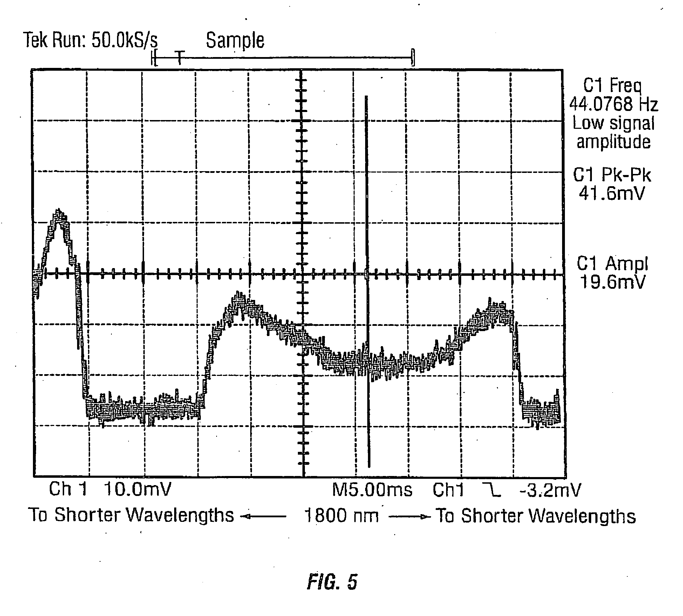

**Figure 5** shows an oscilloscope display for a 2 mm glass sample cell full of water. Water has no major peaks between 1700 and 1800 nm. However, the region shown in **Figure 5** is at the tail end of a major water peak at 1930 nm. Consequently, water transmits less light at 1800 nm than at 1700 nm. The oscilloscope display shows a raw spectrum similar to the empty cell display except for a deeper central dip due to water being a little darker at 1800 nm than at 1700 nm

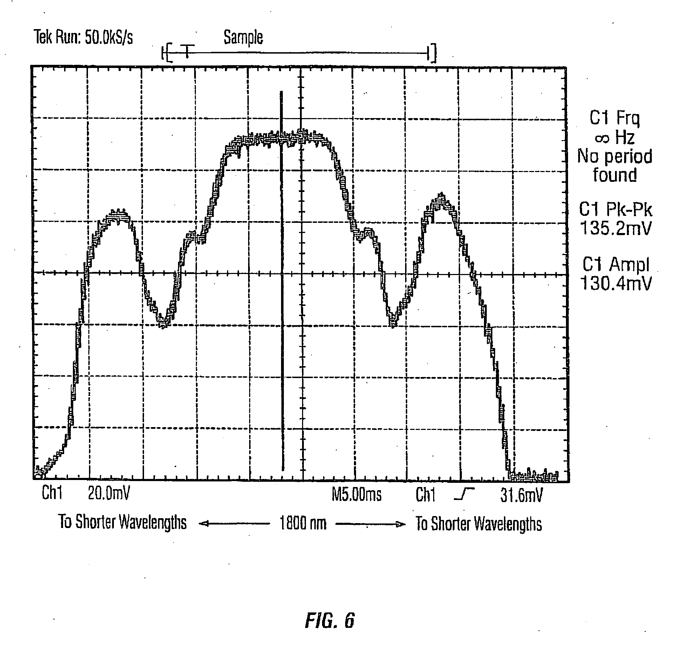

**Figure 6** shows an oscilloscope display for a 2 mm glass sample cell full of crude oil. Moving in either direction away from the center of the spectrum enables a user to see characteristic dips in the transmitted light intensity (absorbance peaks) corresponding to the spectral signature of hydrocarbons. These absorbance peaks occur near 1760 nm and 1725 nm.

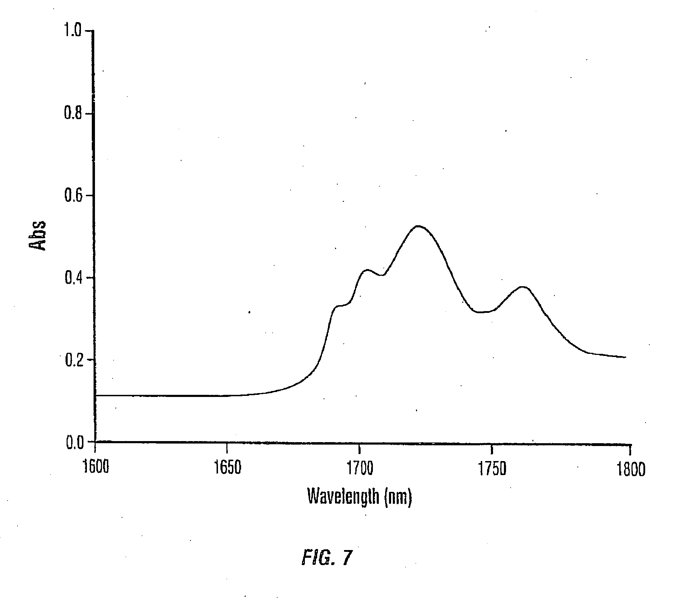

**Figure 7** shows a processed spectrum of the same crude oil taken on a research-grade Cary 500 laboratory spectrometer. The processing comprises correcting for the variation in the intensity of the light source at different wavelengths. A spectrum of the empty cell is collected first, followed by the spectrum of the cell filled with a sample. The base ten logarithm of the ratio of the empty cell light intensity to the sample-filled cell light intensity is the "absorbance" of the sample in the cell and is plotted on the y-axis. It is preferable to generate processed rather than raw spectra from data collected using the apparatus of the invention.

Comparing **Figures 6** to **Figure 7,** the y-axis of each oscilloscope display is a linear scale with light increasing in the up direction and with no correction being made for variation in the intensity of the light source with wavelength. However, the y-axis of the Cary spectra is a logarithmic scale with light decreasing in the up direction and a correction being made for the variation in intensity of the light source with wavelength. Conceptually, turning the oscilloscope display upside down and compressing the y-axis, produces a curve very similar to the Cary spectra. The dips in the oscilloscope displays correspond to the peaks in the Cary displays. Despite these y-axis dissimilarities, the wavelength positions of the peaks in the Cary displays can be used to assign wavelengths to the time scale of the oscilloscope displays. Also, we can assign wavelengths to the time scale by knowing the angle of the rotating filter at each time (and the filter's normal-incidence center wavelength). For simplicity, we can provide a motor, which spins the filter at constant speed.

For a preferred embodiment of the high-resolution spectrometer, wavelength coverage is continuous and the wavelength step size is selected to be as small as possible to measure the angle of rotation. Using an interference filter having a sufficiently narrow bandpass, it is possible to perform a high-resolution scan over one or more portions of the first overtone hydrocarbon band (1600-1850 nm) or over other interesting spectral features. These higher resolution spectra improve our ability to quantify chemical concentrations and to estimate any spectrally correlated physical properties. For example, a user can quantify the percentages of aromatics, olefins, and saturates in the crude oil and estimate the gas oil ratio (GOR) from the percentage of methane, whose peak at 1667 nm, lies left of heavier hydrocarbons peaks that are around 1700-1800 nm.

The spectrometer of the present invention is used in conjunction with a wire line formation tester (e.g. the Reservoir Characterization Instrument (RCI)). It would supplement the existing 17-channel downhole spectrometer, which currently monitors sample cleanup in real time.

With a high-resolution spectrometer, a user should be able to quantify a crude oil's percentage of aromatics, olefins, and saturates, to estimate its gas oil ratio (GOR). Gases such as $CO_2$ might be detectable. With a proper training set, it is possible to develop a correlation equation for the percentage of oil-based mud filtrate contamination in the crude oil.

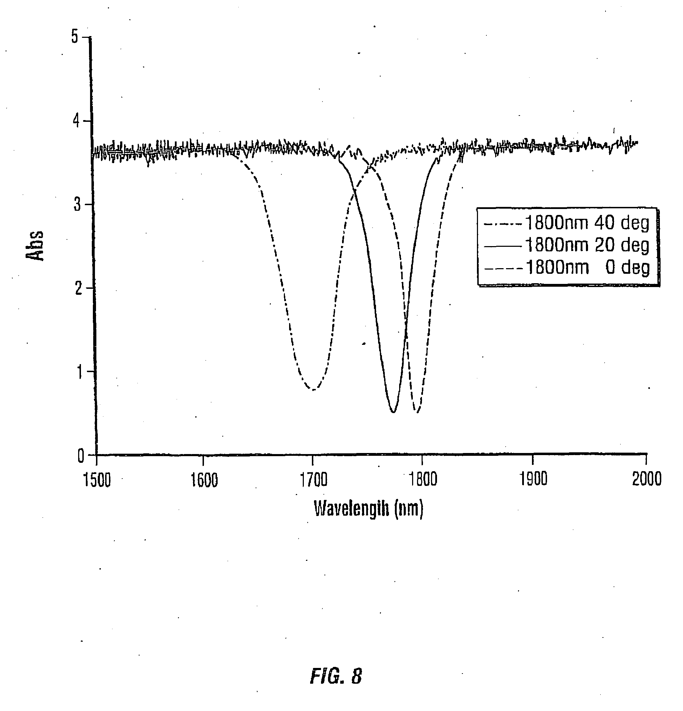

Turning now to **Figure 8, Figure 8** illustrates how the bandpass (Full Width at Half Maximum of the transmission) of an 1800-nm filter changes with tilt. Note that one-half of the transmission corresponds to a 0.3 Absorbance increase because $-\log_{10}(1/2)=0.3$. As shown in **Figure 8,** the greater the tilt angle, the more that the center wavelength shifts to shorter wavelengths and the broader the bandpass becomes about the new center wavelength. At 40 degrees from normal, FWHM=26 nm; at 20 degrees from normal, FWHM=16 nm; and at 0 degrees from normal, FWHM= 11 nm. As shown in Figure 8, the resolution bandwidth is proportional to the angular displacement of the interference filter with respect to the normal incidence of light from the sample.

The foregoing example of a preferred embodiment is for illustration purposes only and not intended to limit the scope of the present invention which is defined by the following claims.

**Claims**

1.    A down hole spectrometer apparatus comprising a sonde for traversing a borehole, an instrument body (214) in the sonde including a collimated light beam (106) arranged to be incident on a fluid sample (105) when the spectrometer is in use, a portion of light incident upon the fluid sample being transmitted through the sample, the apparatus **characterized by**:

at least two interference filters (109) attached to a spindle (107),

a rotator component operable to rotate the angle of the spindle (107), and its attached interference filters, relative to the incident light upon the interference filters, so that, upon rotation, the angle at which light strikes the filters changes; and

at least two light-detecting devices (113), with each light-detecting device paired with one interference filter,

wherein the at least two interference filters (109), are arranged such that transmitted light is incident upon the face thereof, and such that light transmitted from each interference filter is incident upon the light-detecting device (113) with which it is paired.

2. The apparatus of claim 1, further comprising a light gathering lens (103) positioned between a light source and the fluid sample for improved signal strength.

3. The apparatus of claim 1, wherein a rotator further comprises a stepper motor (110) or DC servo motor or an encoder wheel to obtain the angle of rotation.

4. The apparatus of claim 1, further comprising at least one baffle (111) for optically isolating a filter-detector pair from a neighboring filter detector pair, while rotating the entire assembly.

5. The apparatus of claim 1, further comprising a converging lens that is large enough to capture the light beam exiting the interference filter despite beam offset associated with tilting the filter.

6. The apparatus of claim 1, further comprising a holder for supporting at least one interference filter (109) during rotation.

7. The apparatus of claim 1, further comprising said spectrometer (118) capable of withstanding 175°C in operation, a vibration of 5 g and/or shock of 20 g during shipping.

8. A method of measuring the spectrum of a fluid sample in a downhole environment comprising:

lowering a sonde containing a downhole spectrometer apparatus as claimed in any one of claims 1 to 7 into a bore hole;

illuminating a fluid sample (105) in the sampling spectrometer;

correlating angular (118) position of the filters of the spectrometer apparatus with measured light intensity to obtain a measure of the spectrum of the fluid sample at different wavelengths of light;

directing light from the fluid sample onto the at least two interference filters of the spectrometer apparatus (109);

rotating (107) the at least two interference filters (109) on a spindle to obtain different wavelengths of light transmitted through the filters (109) as the angle of incidence of the light (106) upon the rotating filters changes; and

recording the intensities corresponding to the different wavelengths.

9. The method of claim 8, further comprising:

deriving the wavelength of light from the filter's angle of rotation (107).

10. The method of claim 8, further comprising:

scanning a sample's spectrum by measuring at each angle of rotation at least one of the light transmitted through the sample and the light reflected off of the sample.

11. The method of claim 8, further comprising:

scanning (118) four spectral scans with every 360°C of filter rotation at $\pm\theta$ and at $\pm(\theta+180)$ degrees.

12. The method of claim 11, further comprising:

gating (118) the four spectral scans intervals in time or in angle so as to select a single scan or to average two or more scans.

13. The method of claim 8, further comprising:

rotating (110) a filter assembly freely on its spindle (107).

14. The method of claim 8, further comprising:

   angularly oscillating (110) a filter assembly about a central angle.

15. The method of claim 8, further comprising:

   stepping an angular rotation (110) of the filter between two wavelength positions in order to obtain an on-peak versus off-peak measurement.

16. The method of claim 8, further comprising:

   holding the filter by its edge so that the holder does not create a shadow at the filter's center of rotation.

17. The method of claim 8, further comprising:

   determining a gas oil ratio (118) by measuring the percentage of methane.

18. The method of claim 8, further comprising:

   determining a percentage of at least one of Aromatics, Olefins, Saturates (118) in a sample.

19. The method of claim 8, further comprising:

   determining a percentage of contamination (118) from an equation developed by correlation to a training set.

20. The method of claim 8, further comprising:

   determining (118) a percentage of $CO_2$ in natural gas in a sample thereby improving correlations for physical properties comprising density, viscosity, pressure, volume, and temperature properties.

21. The method of claim 8, further comprising:

   determining (118) a percentage of contamination using high-resolution spectra downhole to monitor sample cleanup.

22. The method of claim 8, further comprising:

   determining a percentage of aromatics to monitor sample cleanup.


**Patentansprüche**

1. Bohrlochspektrometervorrichtung mit einer Sonde zum Durchqueren eines Bohrlochs, wobei ein Instrumentenkörper (214) in der Sonde einen kollimierten Lichtstrahl (106) aufweist, der so angeordnet ist, dass er auf eine Fluidprobe (105) trifft, wenn das Spektrometer in Verwendung ist, wobei ein Teil des auf die Fluidprobe treffenden Lichts durch die Probe hindurch übertragen wird, wobei die Vorrichtung **gekennzeichnet ist durch**:

   - wenigstens zwei Interferenzfilter (109), die an einer Spindel (107) angebracht sind,
   - eine Rotatorkomponente, die zum Drehen des Winkels der Spindel (107), und ihrer angebrachten Interferenzfilter, relativ zum auf die Interferenzfilter treffenden Licht betätigbar ist, so dass sich der Winkel, mit welchem das Licht auf die Filter trifft, aufgrund der Drehung ändert, und
   - wenigstens zwei Lichterfassungsvorrichtungen (113), wobei jede Lichterfassungsvorrichtung mit einem Interferenzfilter gepaart ist,
   - wobei die wenigstens zwei Interferenzfilter (109) derart angeordnet sind, dass übertragenes Licht auf ihre Fläche trifft und dass von jedem Interferenzfilter übertragenes Licht auf die Lichterfassungsvorrichtung (113) trifft, mit dem es gepaart ist.

2. Vorrichtung nach Anspruch 1, die weiterhin eine Lichtsammellinse (103) umfasst, die für eine verbesserte Signalstärke zwischen einer Lichtquelle und der Fluidprobe positioniert ist.

3. Vorrichtung nach Anspruch 1, wobei ein Rotator zum Erhalten des Drehwinkels weiterhin einen Schrittmotor (110) oder einen Gleichstromservomotor oder ein Kodierrad umfasst.

4. Vorrichtung nach Anspruch 1, die weiterhin wenigstens eine Trennplatte (111) zur optischen Isolierung eines Filter/Detektor-Paars von einem benachbarten Filter/Detektor-Paar, während die gesamte Anordnung gedreht wird, umfasst.

5. Vorrichtung nach Anspruch 1, die weiterhin eine Konvergierlinse umfasst, die groß genug ist, um den aus dem Interferenzfilter austretenden Lichtstrahl trotz der mit dem Kippen des Filters zusammenhängenden Strahlversetzung einzufangen.

6. Vorrichtung nach Anspruch 1, die weiterhin einen Halter zum Tragen von wenigstens einem Interferenzfilter (109) während der Drehung umfasst.

7. Vorrichtung nach Anspruch 1, die weiterhin das Spektrometer (118) umfasst, das während des Betriebs 175° C und während des Transports eine Vibration von 5 g und/oder eine Erschütterung von 20 g aushalten kann.

8. Verfahren zur Messung des Spektrums einer Fluidprobe in einer Bohrlochumgebung, das umfasst:

   - Absenken einer Sonde, die eine Bohrlochspektrometervorrichtung nach einem der Ansprüche 1 bis 7 enthält, in ein Bohrloch,
   - Beleuchten einer Fluidprobe (105) in dem Probenahmespektrometer,
   - Korrelieren einer Winkelposition (118) der Filter der Spektrometervorrichtung mit einer gemessenen Lichtintensität zum Erhalten eines Maßes für das Spektrum der Fluidprobe bei verschiedenen Lichtwellenlängen,
   - Richten des Lichts von der Fluidprobe auf die wenigstens zwei Interferenzfilter der Spektrometervorrichtung (109),
   - Drehen (107) der wenigstens zwei Interferenzfilter (109) auf einer Spindel zum Erhalten verschiedener durch die Filter (109) hindurch übertragenen Lichtwellenlängen, wenn sich der Auftreffwinkel des Lichts (106) aufgrund der sich drehenden Filter ändert, und
   - Aufzeichnen der den verschiedenen Wellenlängen entsprechenden Intensitäten.

9. Verfahren nach Anspruch 8, das weiterhin umfasst:

   - Herleiten der Lichtwellenlänge aus dem Drehwinkel (107) des Filters.

10. Verfahren nach Anspruch 8, das weiterhin umfasst:

   - Abtasten des Spektrums einer Probe durch Messen wenigstens eines des durch die Probe hindurch übertragenen Lichts und des von der Probe weg reflektierten Lichts bei jedem Drehwinkel

11. Verfahren nach Anspruch 8, das weiterhin umfasst:

   - Abtasten (118) von vier spektralen Scans pro 360° Filterdrehung bei $\pm\theta$ und bei $\pm(\theta+180)$ Grad.

12. Verfahren nach Anspruch 11, das weiterhin umfasst:

   - Torsteuerung (118) der Intervalle der vier spektralen Scans nach Zeit oder Winkel, um einen Einzelscan auszuwählen oder den Durchschnitt von zwei oder mehr Scans zu ermitteln.

13. Verfahren nach Anspruch 8, das weiterhin umfasst:

   - freies Drehen (110) einer Filteranordnung auf seiner Spindel (107).

14. Verfahren nach Anspruch 8, das weiterhin umfasst:

- In-Winkelschwingung-Versetzen (110) einer Filteranordnung um einen Mittelwinkel.

**15.** Verfahren nach Anspruch 8, das weiterhin umfasst:

- Abstufen einer Winkeldrehung (110) des Filters zwischen zwei Wellenlängenpositionen, um eine On-Peak/Off-Peak-Messung zu erhalten.

**16.** Verfahren nach Anspruch 8, das weiterhin umfasst:

- Halten des Filters durch seinen Rand, so dass der Halter keinen Schatten am Drehmittelpunkt des Filters erzeugt.

**17.** Verfahren nach Anspruch 8, das weiterhin umfasst:

- Bestimmen eines Gas/Öl-Verhältnisses (118) durch Messen des Prozentsatzes an Methan.

**18.** Verfahren nach Anspruch 8, das weiterhin umfasst:

- Bestimmen eines Prozentsatzes von wenigstens einem aus Aromaten, Olefinen und gesättigten Stoffen (118) in einer Probe.

**19.** Verfahren nach Anspruch 8, das weiterhin umfasst:

- Bestimmen eines Verunreinigungsanteils (118) aus einer Gleichung, die durch Korrelation mit einem Trainingssatz entwickelt wurde.

**20.** Verfahren nach Anspruch 8, das weiterhin umfasst:

- Bestimmen (118) eines Prozentsatzes an $CO_2$ in Erdgas in einer Probe, wodurch Korrelationen für physikalische Eigenschaften, die Dichte, Viskosität, Druck und Volumen umfassen, sowie für Temperatureigenschaften verbessert werden.

**21.** Verfahren nach Anspruch 8, das weiterhin umfasst:

- Bestimmen (118) eines Verunreinigungsanteils unter Verwendung hochauflösender Spektren im Bohrloch zur Überwachung der Probenreinigung.

**22.** Verfahren nach Anspruch 8, das weiterhin umfasst:

- Bestimmen eines Prozentsatzes an Aromaten zur Überwachung der Probenreinigung.


**Revendications**

**1.** Appareil à spectromètre de fond de trou comportant une sonde destinée à parcourir un trou de forage, un corps d'instrument (214) dans la sonde comprenant un faisceau lumineux collimaté (106) agencé de façon à tomber sur un échantillon de fluide (105) lorsque le spectromètre est en cours d'utilisation, une partie de la lumière tombant sur l'échantillon de fluide étant transmise à travers l'échantillon, l'appareil étant **caractérisé par** :

au moins deux filtres anti-parasites (109) attachés à une tige (107),
une pièce de dispositif de rotation pouvant être mise en oeuvre pour faire tourner l'angle de la tige (107), et les filtres anti-parasites qui lui sont attachés, par rapport à la lumière tombante sur les filtres anti-parasites, afin que, sous l'effet d'une rotation, l'angle sous lequel de la lumière atteint les filtres change ; et
au moins deux dispositifs (113) de détection de lumière, chaque dispositif de détection de lumière formant une paire avec un filtre anti-parasites,

dans lequel les, au moins deux, filtres anti-parasites (109) sont agencés de façon que la lumière transmise tombe sur leur face, et que cette lumière transmise depuis chaque filtre anti-parasites tombe sur le dispositif (113) de détection de lumière avec lequel il forme une paire.

2. Appareil selon la revendication 1, comportant en outre une lentille (103) de regroupement de lumière positionnée entre une source de lumière et l'échantillon de fluide pour améliorer le niveau du signal.

3. Appareil selon la revendication 1, dans lequel un dispositif de rotation comporte en outre un moteur pas à pas (110) ou un servo-moteur à courant continu ou une roue de codeur pour obtenir l'angle de rotation.

4. Appareil selon la revendication 1, comportant en outre au moins un déflecteur (111) destiné à isoler optiquement une paire filtre-détecteur d'une paire filtre-détecteur voisine, tout en faisant tourner l'ensemble entier.

5. Appareil selon la revendication 1, comportant en outre une lentille convergente qui est suffisamment grande pour capturer le faisceau lumineux sortant du filtre anti-parasites malgré un décalage du faisceau associé à l'inclinaison du filtre.

6. Appareil selon la revendication 1, comportant en outre un élément de maintien destiné à supporter au moins un filtre anti-parasites (109) pendant la rotation.

7. Appareil selon la revendication 1, comportant en outre ledit spectromètre (118) capable de supporter 175°C en cours de fonctionnement, une vibration de 5 g et/ou un chou de 20 g pendant le transport.

8. Procédé de mesure du spectre d'un échantillon de fluide dans un environnement de fond de trou comprenant :

la descente d'une sonde contenant un appareil à spectromètre de fond de trou selon l'une quelconque des revendications 1 à 7 dans un trou de forage ;
l'illumination d'un échantillon de fluide (105) dans le spectromètre d'échantillonnage ;
la mise en corrélation de la position angulaire (118) des filtres de l'appareil à spectromètre avec une intensité lumineuse mesurée pour obtenir une mesure du spectre de l'échantillon de fluide à différentes longueurs d'onde de la lumière ;
le fait de diriger la lumière provenant de l'échantillon de fluide sur les, au moins deux, filtres anti-parasites de l'appareil à spectromètre (109) ;
le fait de faire tourner (107) les, au moins deux, filtres anti-parasites (109) sur une tige pour obtenir différentes longueurs d'onde de lumière transmises à travers les filtres (109) en même temps que l'angle d'incidence de la lumière (106) sur les filtres en rotation change ; et
l'enregistrement des intensités correspondant aux différentes longueurs d'onde.

9. Procédé selon la revendication 8, comprenant en outre :

le fait de dériver la longueur d'onde de la lumière à partir de l'angle de rotation (107) du filtre.

10. Procédé selon la revendication 8, comprenant en outre :

le balayage d'un spectre de l'échantillon en mesurant, à chaque angle de rotation, au moins l'une de la lumière transmise à travers l'échantillon et de la lumière revenant par réflexion de l'échantillon.

11. procédé selon la revendication 8, comprenant en outre :
le balayage (118) selon quatre balayages spectraux à chaque rotation de 360°C du filtre à $\pm\theta$ et à $\pm(\theta+180)$ degrés.

12. Procédé selon la revendication 11, comprenant en outre :

le déclenchement (118) des quatre balayages spectraux à des intervalles, de temps ou d'angle, pour sélectionner un balayage unique ou pour établir la moyenne de deux ou plus de deux balayages.

13. Procédé selon la revendication 8, comprenant en outre :

le fait de faire tourner (110) un ensemble à filtres librement sur sa tige (107).

14. Procédé selon la revendication 8, comprenant en outre :

le fait de faire osciller angulairement (110) un ensemble à filtres autour d'un angle central.

15. Procédé selon la revendication 8, comprenant en outre :

l'exécution pas à pas d'une rotation angulaire (110) du filtre entre deux positions de longueurs d'onde afin d'obtenir une mesure de valeur sur crête en fonction de valeurs hors-crête.

16. Procédé selon la revendication 8, comprenant en outre :

le maintien du filtre par son bord afin que l'élément de maintien ne crée pas d'ombre au centre de rotation du filtre.

17. Procédé selon la revendication 8, comprenant en outre :

la détermination d'un rapport gaz sur huile (118) en mesurant le pourcentage de méthane.

18. Procédé selon la revendication 8, comprenant en outre :

la détermination d'un pourcentage d'au moins l'une de substances aromatiques, oléfiniques, saturées (118) dans un échantillon.

19. Procédé selon la revendication 8, comprenant en outre :

la détermination d'un pourcentage de contamination (118) à partir d'une équation développée par corrélation avec un ensemble de formation.

20. Procédé selon la revendication 8, comprenant en outre :

la détermination (118) d'un pourcentage de $CO_2$ dans du gaz naturel dans un échantillon, améliorant ainsi des corrélations pour des propriétés physiques comprenant des propriétés de masse volumique, de viscosité, de pression, de volume et de température.

21. Procédé selon la revendication 8, comprenant en outre :

la détermination (118) d'un pourcentage de contamination en utilisant des spectres à haute résolution en fond de trou pour contrôler un nettoyage d'échantillon.

22. Procédé selon la revendication 8, comprenant en outre :

la détermination d'un pourcentage de substances aromatiques pour contrôler un nettoyage d'échantillon.

*FIG. 1*

FIG. 2

FIG. 3B

FIG. 3A

*FIG. 4*

*FIG. 5*

**FIG. 6**

FIG. 7

FIG. 8

Predicted vs. Observed Values
Dependant variable: CONTAMIN

FIG. 9

**Predicted vs. Observed Values**
**Dependant variable: CONTAMIN**

*FIG. 10*

FIG. 11

**EP 1 511 917 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5166747 A
- EP 1150106 A
- US 3877818 A